(19)

Europäisches Patentamt
European Patent Office
Office européen des brevets

(11) **EP 2 472 768 B1**

(12) **EUROPEAN PATENT SPECIFICATION**

(45) Date of publication and mention
of the grant of the patent:
**23.12.2015 Bulletin 2015/52**

(21) Application number: **10811167.5**

(22) Date of filing: **25.05.2010**

(51) Int Cl.:
***H04L 7/00*** *(2006.01)*

(86) International application number:
**PCT/CN2010/073215**

(87) International publication number:
**WO 2011/023007 (03.03.2011 Gazette 2011/09)**

(54) **METHOD AND SYSTEM FOR TIME SYNCHRONIZATION IN A PASSIVE OPTICAL NETWORK**

VERFAHREN UND SYSTEM ZUR ZEITSYNCHRONISATION IN EINEM PASSIVEN OPTISCHEN NETZWERK

PROCÉDÉ ET SYSTÈME DE SYNCHRONISATION TEMPORELLE DANS UN RÉSEAU OPTIQUE PASSIF

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **25.08.2009  CN 200910189624**

(43) Date of publication of application:
**04.07.2012  Bulletin 2012/27**

(73) Proprietor: **ZTE Corporation**
**Shenzhen, Guangdong 518057 (CN)**

(72) Inventors:
• **LU, Jianxin**
**Shenzhen**
**Guangdong 518057 (CN)**

• **HE, Yuanling**
**Shenzhen**
**Guangdong 518057 (CN)**

(74) Representative: **Petraz, Gilberto Luigi et al**
**GLP S.r.l.**
**Viale Europa Unita, 171**
**33100 Udine (IT)**

(56) References cited:
**EP-A1- 1 164 730       CN-A- 101 431 385**
**JP-A- 2009 005 070**

• **"as-Luo-Clause13-0509 ; as-Luo-Clause13-0509", IEEE DRAFT; AS-LUO-CLAUSE13-0509, IEEE-SA, PISCATAWAY, NJ USA, vol. 802.1, 13 May 2009 (2009-05-13), pages 1-6, XP017642597, [retrieved on 2009-05-13]**

**Description**

Technical Field

The present invention relates to the field of PON (Passive Optical Network) communication, and especially to a method and system for time synchronization in a passive optical network.

Background of the Related Art

Optical access technology provides a wide bandwidth and a high reliability, and represents a development direction of the access technology. PON is one of the major optical access technologies, and in particular, an EPON (Ethernet Passive Optical Network) technology has been used on a large scale in many areas in the world.

With the rapid development of data service, the demand on mobility of data access is increasingly prominent, and the convergence of wire and wireless will better meet the experiences of the users. The EPON technology has a whole service access capability for data, voice and TDM (Time Division Multiplex), and thus can meet the requirements of wireless access that is continuously evolving. In particular, in the application of micro cell and femtocell accesses, the convergence of the PON makes the whole network clear in layers, easy to construct, and highly efficient in management.

Mobile base stations, such as a CDMA2000 (Code Division Multiple Access 2000), a TD-SCDMA (Time Division-Synchronous Code Division Multiple Access) and a WiMAX (Worldwide Interoperability for Microwave Access), have strict requirements for the time synchronization. Some value-added services provided by a mobile network also need a strict time synchronization. Currently, on a mobile base station, a wireless network time service mode, such as the GPS (Global Positioning System) technology, etc. is mainly used. During the construction of a high-quality mobile network, the use of wire network time service has an important significance in economy and stability.

In the course of the IP-based network, the PTP (Precision Time Protocol) in IEEE (Institute of Electrical and Electronics Engineers) 1588 is widely used in the mobile base stations. However, the PTP operates well in the situation where the uplink and downlink delays of the network are symmetrical, while processing needs to be performed on the asymmetrical nodes if the network is an asymmetrical network.. The PON is precisely a network which has asymmetric uplink and downlink delays, so the workload will be large, the processing flow will be complicated and more network bandwidth will be occupied if PTP is directly process on a PON.

The document "AS-LUO-CLAUSE 13-0509", IEEE-SA, discloses that the Mufti-Point Control Protocol (MPCP) enables a MAC Client to participate in a point-to-mufti-point optical network. MPCP allows a MAC Client to transmit and receive frames as if it was connected to a dedicated link. The timing process in MPCP relies on the 32-bit counters at both the Optical Line Terminal (OLT) and the Optical Network Unit. These counters provide a local time stamp fhat increases every tick.

Summary of the Invention

In view of this, the main object of the present invention is to provide a method and system for time synchronization in a passive optical network, in order to solve the technical problem that the processing flow will be complicated, the workload will be large, and more network bandwidth will be occupied when time synchronization is implemented by a standard PTP in the PON.

In order to solve the above technical problem, the technical solution of the present invention is implemented as specified in the claims.

In the solution of the present invention, by using the feature that the reference clocks of said OLT and ONU MPCP counter are synchronized strictly, the time of the synchronization setting can be flexibly selected without real time requirements, the processing flow is simple without the need of adding complex hardware devices, and the occupation of the bandwidth is reduced.

Brief Description of Drawings

Fig. 1 illustrates the structure of a PON system according to the present invention;

Fig. 2 illustrates the flow of time synchronization in the PON according to the present invention; and

Fig. 3 illustrates a time synchronization relationship between the an OLT and an ONU according to an example of the present invention.

Preferred Embodiments

The preferred embodiments of the present invention will be illustrated in conjunction with drawings, and it should be understood that the preferred embodiments described here are only used to illustrate and explain the present invention, but not to limit the present invention.

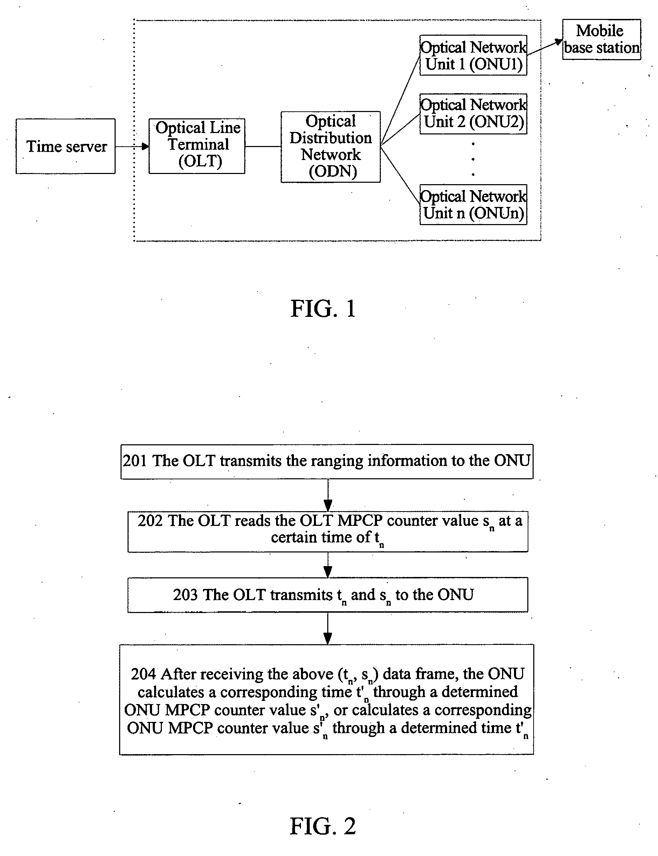

Figure 1 illustrates the structure of a PON system of the present invention. The PON is generally composed of three parts, an OLT (Optical Line Terminal), an ODN (Optical Distribution Network) and an ONU (Optical Network Unit). Wherein, the OLT is generally far from the ONU. A time provider is generally a time server (such as an IEEE1588 time) or a GPS. The dashed line block part in the figure is the part involved in the technical solution of the present invention. The OLT local time is synchronized with an external time and a certain precision is ensured, while, the method for time synchronization in the present invention concerns the time synchronization of the ONU and the OLT.

The present invention is intended to synchronize accurately the time information at the OLT side to the ONU side, and in a CDMA2000 system, it is required that the error of the time synchronization is not more than 3 microsecond; in a TD-SCDMA system, it is required that this error is no more than 1.5 microsecond; however, by the technical solution of the present invention, it can be realized that the error of the time synchronization from the OLT to the ONU is no more than 100 nanosecond.

A key of the present invention lies in that the OLT transmits a certain time and the MPCP (Multi-Point Control Protocol) counter value read at that time to the ONU through a management or service plane message; after receiving the time and MPCP counter value, in conjunction with information such as the ranging information RTT (Round Trip Time), the ONU determines a time corresponding to a certain MPCP counter value on the ONU, or a ONU MPCP counter value corresponding to a certain time, and updates the local time.

In particular, a system for time synchronization in the PON in an example of the present invention comprises an OLT and an ONU. The OLT transmits a data frame comprising a first time $t_n$ and an OLT MPCP counter value $s_n$ corresponding to the first time $t_n$ to an ONU through a management or service plane message; after receiving the data frame, in conjunction with the ranging information RTT, the ONU calculates a corresponding second time $t'_n$ through a determined ONU MPCP counter value $s'_n$, or calculates a corresponding ONU MPCP counter value $s'_n$ through a determined second time $t'_n$, and updates the local time.

In the above system, the OLT periodically carries out ranging on the under ONU, and after finding a new ONU or finding a change of the ranging information RTT of a certain ONU, it transmits the new ranging information RTT to said ONU.

Wherein, the ranging information RTT is transmitted to the ONU through a manage plane or a service plane in a unicast mode, and the first time $t_n$ and the OLT MPCP counter value $s_n$ are transmitted to the ONU through a management plane or a service plane in a broadcast mode, i.e. through a broadcast channel.

The OLT ranges the ONU according to the IEEE 802.3 standards to obtain a ranging information RTT value, and the ONU synchronizes the ONU MPCP counter with the OLT counter according to the operating mode of the PON. In particular, when the OLT sends a MPCP protocol data frame to the ONU, the MPCP counter data at the sending time is included in the MPCP protocol data frame, and when receiving the MPCP protocol data frame, the ONU synchronized its own counter according to a certain rule. Therefore the MPCP counter of the ONU lags behind the OLT for about RTT/2 time.

The solution of the present invention uses the feature that the reference clocks of the above OLT and the MPCP counter of the ONU are strictly synchronized.

The examples of the method for time synchronization in a PON according to the present invention will be described in detail below. All the solutions of the following examples can be also applied to the system for time synchronization in a PON according to the present invention.

Fig. 2 illustrates the flow of time synchronization in a PON in the present invention. As shown in fig. 2, the time synchronization process in the PON comprises the following steps:

In step 1, after finding a new ONU or finding a change of the ranging information RTT of a certain ONU, the OLT transmits the new ranging information RTT to the ONU through a management or service plane message.

In step 2, the OLT reads the OLT MPCP counter value $s_n$ at a certain time $t_n$.

In step 3, the OLT sends a data frame comprising $t_n$ and $s_n$ to the ONU through a management or service plane message.

In step 4, after receiving the above data frame ($t_n$, $s_n$), the ONU can calculate a corresponding time $t'_n$ through a

determined ONU MPCP counter value $s'_n$.

Wherein, $t'_n$ can be obtained through calculation in conjunction with the above information and ranging information RTT, MPCP counter reference clock period, etc. $s'_n$ can be read immediately after the $(t_n, s_n)$ is received, or can be a ONU MPCP counter value at a certain time in the future.

After receiving the above data frame $(t_n, s_n)$, the ONU can calculate a corresponding ONU MPCP counter value $s'_n$ through a determined time $t'_n$.

Wherein, $s'_n$ can be obtained through calculation in conjunction with the above information and ranging information RTT, MPCP counter reference clock period, etc. $t'_n$ generally can be a certain time after the $(t_n, s_n)$ is received.

The step of the ONU calculating the time $t'_n$ corresponding to the $s'_n$ is particularly as follows:

the ONU time $t'_n$ is mainly determined by three parts, $t_n$, time between the $s'_n$ and $s_n$, and $RTT_{ds}$. $RTT_{ds}$ is a downlink ranging result from the OLT to the ONU, and is approximately equal to RTT/2.

In a PON system, the MPCP counter value of the EPON is 32 bits, and overflow may occur. Here, if it is assumed that N times of MPCP counter overflow occurs between $s'_n$ and $s_n$, then $t'_n$ can be obtained from the following formula:

$$t'_n = t_n + (s'_n + N \times 2^{32} - s_n + RTT_{ds}) \times \widetilde{T}_n$$

wherein, $\widetilde{T}_n$ is a time corresponding to a unit value of the MPCP counter. Since the time of the complete reference clock period of the MPCP counter is more than 1 minute, and a message is generally not used for calculating the time after 1 minute, N generally is not larger than 1.

Also, the determined $t'_n$ after the $t_n$ can be used inversely to calculate the corresponding MPCP counter value $s'_n$ at this time and the number of times N of the overflow of the ONU MPCP counter.

$$N = INT((s_n + INT((t'_n - t_n)/\widetilde{T}_n) - RTT_{ds})/2^{32});$$

$$s'_n = (s_n + INT((t'_n - t_n)/\widetilde{T}_n) - RTT_{ds}) \bmod 2^{32}$$

wherein "INT" is operated as a rounding operation and "mod" is operated as a modular operation.

The ONU calculates the time amount $\widetilde{T}_n$ according to the $(t_n, s_n)$ and $(t_{n-x}, s_{n-x})$ sent historically. x in the $(t_{n-x}, s_{n-x})$ is the number of times of the interval. The time amount $\widetilde{T}_n$ can be obtained by dividing the time interval between the time interval $t_n$ and $t_{n-x}$ by the MPCP counting difference in this time period. When the reference clock of the ONU MPCP counter and the reference clock of the OLT MPCP counter are synchronized with said transmitting time, said $\widetilde{T}_n$ is a constant of 16 nanoseconds.

After obtaining the above $t'_n$ or $s'_n$, the ONU updates the local time using the calculated $t'_n$ or $s'_n$, and how to update belongs to the prior art, and thus will not described here to avoid redundancy.

In the above method, the OLT carries out ranging on the under ONU periodically, and if a new ONU or a change of the ranging information of a certain ONU is found, , it transmits the new ranging information RTT to said ONU. Wherein, the ranging information RTT is transmitted to the ONU through a management plane or a service plant in a unicast mode, the $(t_n, s_n)$ is transmitted to the ONU through a management plane or the service plane in a broadcast mode. The OLT can give the $(t_n, s_n)$ as a time reference of the ONU in a fixed or unfixed period.

In the present invention, the MPCP counter defined by IEEE802.3 is used as a time reference. In an EPON, when transmitting the MPCP data frame, the OLT synchronizes the current MPCP counter value to the ONU. After receiving the MPCP data frame, the ONU compares the received MPCP value with the local counter value, and if the difference is larger than a threshold (for which please refer to definition in the IEEE802.3 standard), it updates the local MPCP counter. The ONU uses a loop timing mode, and its MPCP counter reference time is homologous with the OLT, therefore, according to the EPON ranging principle, the ONU and the OLT MPCP counters have a difference of RTT/2 + $\Delta$, wherein $\Delta$ is a difference caused by the uplink/downlink asymmetry during the whole procedure of return processing, and the difference generally is relatively small. Calculation can be made by using the OLT, ONU chip, and system implementation principle to provide parameters, or the value can be partially compensated through testing.

In the EPON, the frequency of the MPCP counter reference clock is 62.5 MHz, and the MPCP has a bandwidth of 32 bits and a counter period of about 64 seconds. Generally, multiple overflows can be prevented by comparing the timer interval or by a system design. Therefore, in the situation that only one overflow or no overflow is considered, the method of the present invention can be also implemented in the following way.

$SMOD_{32}(x)$ function is defined as follows:

$$SMOD_{32}(x) = (x + 2^{32}) \bmod 2^{32}$$

The OLT obtain the RTT value of each ONU, and transmits the value to each ONU in a unicast mode. When the RTT of a certain ONU changes, the OLT re-informs the ONU.

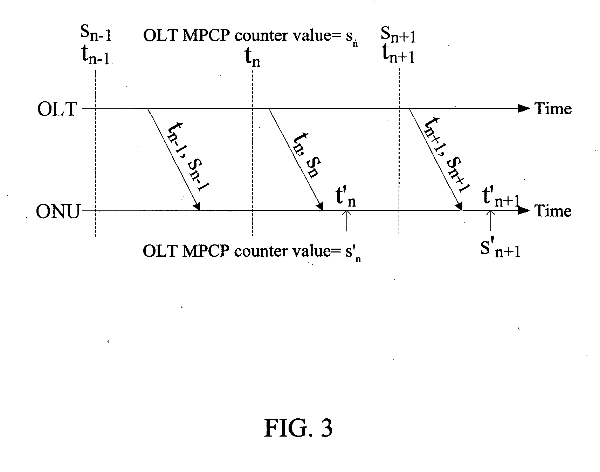

Fig. 3 illustrates the time synchronization relationship of the OLT and the ONU in this embodiment. As shown in Fig. 3, the OLT reads the OLT MPCP counter (OLTMPCPTimeStamp) value $s_n$ at the time of $t_n$, and sends the $(t_n, s_n)$ information to the ONU.

The $(t_n, s_n)$ information can be communicated through a PON data (service) plane or a PON management plane. A PON management plane is used in this embodiment, and more particularly, an OAM (Operation Administration and Maintenance) frame of the PON management plane is used in this embodiment. Wherein, the $(t_n, s_n)$ is sent to the ONU in a broadcast mode in order to save the bandwidth.

After receiving the $(t_n, s_n)$, the ONU can calculate the ONU MPCP counter as a time $t'_n$ corresponding to $s'_n$. The calculation formula is as follows:

$$t'_n = t_n + SMOD_{32}(s'_n - s_n) \times \widetilde{T}_n + (RTT/2 + \Delta) \times \widetilde{T}_n$$

it can also calculate a ONU MPCP counter value $s'_n$ corresponding a certain time $t'_n$ after receiving the $(t_n, s_n)$. The calculation formula is as follows:

$$s'_n = SMOD_{32}(s_n + INT((t'_n - t_n)/\widetilde{T}_n) - (RTT/2 + \Delta))$$

wherein the $\widetilde{T}_n$ is a time amount, that is, the time corresponding to the unit value of the MPCP counter can be obtained through calculation from the historical $(t_n, s_n)$ and $(t_{n-x}, s_{n-x})$, and this calculation value can be implemented in many ways. By way of example, $\widetilde{T}_n$ can be obtained according to the following formula when a suitable interval time x is selected in the embodiment:

$$\widetilde{T}_n = (t_n - t_{n-x})/\dot{SMOD}_{32}(s_n - s_{n-x})$$

For a further illustration, if the reference clock of the ONU MPCP counter is homologous with the time transmitted by the OLT, the $\widetilde{T}_n$ is a constant of 16 nanoseconds.

In this example, the OLT acquires the $(t_n, s_n)$ information in a fixed period and sends to the ONU, wherein the period is a configurable parameter, and is generally selected as 0.5 second, 1 second or 2 seconds, etc.

For example, when the period is selected as 1 second, and the OLT and ONU MPCP counters have homologous reference clocks, the OLT sends the $(t_n, s_n)$ information through an OAM frame every 1 second; after receiving the information, the ONU obtains a corresponding $t'_n$ according to the determined MPCP counter value $s'_n$ on the ONU using the following formula:

$$t'_n = t_n + (s'_n - s_n) \times 16ns + (RTT/2 + \Delta) \times 16ns$$

After obtaining the above $t'_n$ or $s'_n$, the ONU updates the local time using the calculated $t'_n$ or $s'_n$.

According to the solution provided according to the present invention, after the ONT time is synchronized with the OLT, a high precision can be obtained, and the processing is simple and highly efficient. The time ambiguity introduced in the PON system is related with the time amount of the MPCP counter, and in a PON system with a relatively good compensation, the deviation between the ONU time and the OLT time is less than 2 time amounts of the MPCP counter.

The implementation mode for synchronizing the ONU with the OLT time in the PON is illustrated in specific examples, but does not constitute the limitation to the present invention, or is limited to the EPON. This concept can also be used for implementation in other PONs through a suitable modification. Unless in a conflict situation, the solutions of the above embodiments can be combined with each other.

The above content is only preferred examples of the present invention, and is not intended to limit the present invention. The present invention may have various modifications and changes for those skilled in the art.

**Claims**

1. A method for time synchronization, applied in a passive optical network, PON, comprising:

   an Optical Line Terminal, OLT, reading, at a first time $t_n$, an OLT Multi-Point Control Protocol, MPCP, counter value $s_n$, and transmitting the first time $t_n$ and the OLT MPCP counter value $s_n$ corresponding to the first time $t_n$ to an Optical Network Unit, ONU;
   after receiving said $t_n$ and $s_n$, in conjunction with ranging information, the ONU calculating a corresponding second time $t'_n$ through a determined ONU MPCP counter value $s'_n$, or calculating a corresponding ONU MPCP counter value $s'_n$ through a determined second time $t'_n$, and updating a local time by using the calculated $t'_n$ or $s'_n$.

2. The method according to claim 1, wherein, in a situation where N times of overflows of an ONU MPCP counter occurs between said $s'_n$ and said $s_n$,
   said step of calculating the corresponding second time $t'_n$ through a determined ONU MPCP counter value $s'_n$ is particularly:

$$t'_n = t_n + (s'_n + N \times 2^m - s_n + RTT_{ds}) \times \widetilde{T}_n$$

   wherein m is a bit width of the MPCP counter; $RTT_{ds}$ is a result of downlink ranging from said OLT to said ONU, and is approximately equal to RTT/2; $\widetilde{T}_n$ is a time corresponding to a unit value of the MPCP counter; and N >= 0.

3. The method according to claim 1, wherein, in a situation where N times of overflows of the ONU MPCP counter occurs between said $t_n$ and said $t'_n$,
   said step of calculating a corresponding ONU MPCP counter value $s'_n$ through a determined second time $t'_n$ is particularly:

$$s'_n = (s_n + INT((t'_n - t_n)/\widetilde{T}_n) - RTT_{ds}) \bmod 2^m$$

   wherein "INT" operation is a rounding operation; "mod" operation is a modular operation; m is a bit width of the MPCP counter; $RTT_{ds}$ is a result of downlink ranging from said OLT to said ONU, and is approximately equal to RTT/2; $\widetilde{T}_n$ is a time corresponding to a unit value of the MPCP counter; and N >= 0.

4. The method according to claim 3, wherein, the number N of the times of the overflows of said ONU MPCP counter is particularly:

$$N = INT((s_n + INT((t'_n - t_n)/\widetilde{T}_n) - RTT_{ds})/2^m)$$

   wherein "INT" operation is the rounding operation; m is the bit width of the MPCP counter; $RTT_{ds}$ is the result of the downlink ranging from said OLT to said ONU, and is approximately equal to RTT/2; $\widetilde{T}_n$ is the time corresponding to the unit value of the MPCP counter.

5. The method according to claim 1, wherein, in a situation where 1 or 0 overflow of the ONU MPCP counter occurs between said $s'_n$ and said $s_n$,
   said step of calculating the corresponding second time $t'_n$ through a determined ONU MPCP counter value $s'_n$ is particularly:

$$t'_n = t_n + SMOD_m(s'_n - s_n) \times \widetilde{T}_n + (RTT/2 + \Delta) \times \widetilde{T}_n$$

wherein m is a bit width of the MPCP counter; $SMOD_m(x) = (x + 2^m) \bmod 2^m$; "mod" operation is a modular operation; $\Delta$ is a time difference caused by uplink and downlink asymmetry during a whole return processing; $\tilde{T}_n$ is a time corresponding to a unit value of the MPCP counter; and RTT is a loop delay.

6. The method according to claim 1, wherein, in a situation where 1 or 0 overflow of the ONU MPCP counter occurs between said first time $t_n$ and said second time $t'_n$, said step of calculating the corresponding ONU MPCP counter value $s'_n$ through a determined second time $t'_n$ is particularly:

$$s'_n = SMOD_m(s_n + INT((t'_n - t_n)/\tilde{T}_n) - (RTT/2 + \Delta))$$

wherein m is a bit width of the MPCP counter; $SMOD_m(x) = (x + 2^m) \bmod 2^m$; "mod" operation is a modular operation; $\Delta$ is a time difference caused by uplink and downlink asymmetry during a whole return processing; $\tilde{T}_n$ is a time corresponding to a unit value of the MPCP counter; and RTT is a loop delay.

7. The method according to any of claims 2 to 6, wherein, said $\tilde{T}_n$ is obtained by the ONU by dividing a time interval between said first time $t_n$ and said second time $t'_n$ by a difference between the ONU MPCP counter value $s_n$ and the ONU MPCP counter value $s'_n$ in this time period.

8. The method according to claim 7, wherein, when reference clocks of said OLT MPCP counter and ONU MPCP counter are synchronized with said transmitted first time, said $\tilde{T}_n$ is a constant.

9. The method according to any one of claims 1 to 6, wherein, before said step of transmitting the first time $t_n$ and the OLT MPCP counter value $s_n$ corresponding to the first time $t_n$ to an ONU, the method further comprises: the OLT periodically ranging ONUs, and after finding a new ONU or finding a change of the ranging information of an ONU, transmitting new ranging information to the ONU.

10. The method according to any of claims 1 to 6, wherein, said first time $t_n$ and the OLT MPCP counter value $s_n$ are transmitted to the ONU as a time reference in a fixed or unfixed period by the OLT.

11. The method according to claim 9, wherein,
said ranging information is transmitted to the ONU by a management plane or a service plane in a unicast mode; and/or,
said first time $t_n$ and the OLT MPCP counter value $s_n$ are transmitted to the ONU by a management plane or a service plane in a broadcast mode.

12. A system for time synchronization in a passive optical network, comprising an Optical Line Terminal, OLT, and an Optical Network Unit, ONU, wherein
said OLT is used to read, at a first time $t_n$, an OLT Multi-Point Control Protocol, MPCP, counter value $s_n$, and transmit the first time $t_n$ and the OLT MPCP counter value $s_n$ corresponding to the first time $t_n$ to the ONU;
said ONU is used to, after receiving said first time $t_n$ and said OLT MPCP counter value $s_n$, in conjunction with ranging information, calculate a corresponding second time $t'_n$ through a determined ONU MPCP counter value $s'_n$, or calculate a corresponding ONU MPCP counter value $s'_n$ through a determined second time $t'_n$, and update a local time by using the calculated $t'_n$ or $s'_n$.

13. The system according to claim 12, wherein,
said OLT is further used to periodically range ONUs, and after finding a new ONU or finding a change of the ranging information of an ONU, transmit new ranging information to the ONU.

14. The system according to claim 13, wherein,
said ranging information is transmitted to said ONU by a management plane or a service plane in a unicast mode; and/or,
said first time $t_n$ and said OLT MPCP counter value $s_n$ are transmitted to said ONU by a management plane or a service plane in a broadcast mode.

**Patentansprüche**

1. Verfahren zur Zeitsynchronisation, in einem passiven optischen Netzwerk, PON, angewendet, umfassend:

   ein optisches Leitungsendgerät, OLT, das, zu einer ersten Zeit $t_n$, einen OLT-Mehrpunkt-Steuerungsprotokoll, MPCP,-Zählerwert $s_n$ liest und die erste Zeit $t_n$ und den OLT MPCP-Zählerwert $s_n$, der der ersten Zeit $t_n$ entspricht, an eine optische Netzeinheit, ONU, sendet;
   nach Erhaltung der genannten $t_n$ und $s_n$, in Verbindung mit Entfernungsmessungsinformationen, berechnet die ONU eine entsprechende zweite Zeit $t'_n$ durch einen bestimmten ONU MPCP-Zählerwert $s'_n$ oder einen entsprechenden ONU MPCP-Zählerwert $s'_n$ durch eine bestimmte zweite Zeit $t'_n$, und aktualisiert eine Ortszeit durch Verwendung der berechneten $t'_n$ oder $s'_n$.

2. Verfahren nach Anspruch 1, worin, in einer Situation, wo N-Male von Überläufen eines ONU MPCP-Zählers zwischen dem gesagten $s'_n$ und dem gesagten $s_n$ erfolgen, der genannte Schritt des Berechnens der entsprechenden zweiten Zeit $t'_n$ durch einen bestimmten ONU MPCP-Zählerwert $s'_n$ insbesondere Folgendes ist:

$$t'_n = t_n + (s'_n + N \times 2^m - s_n + RTT_{ds}) \times \tilde{T}_n$$

   wo $m$ eine Bit-Breite des MPCP-Zählers ist; $RTT_{ds}$ ein Ergebnis einer Abwärtsstrecke-Entfernungsmessung von dem genannten OLT zur genannten ONU ist und ungefähr RTT/2 entspricht; $\tilde{T}_n$ eine Zeit ist, die einem Einheitswert des MPCP-Zählers entspricht; und $N >= 0$.

3. Verfahren nach Anspruch 1, worin, in einer Situation, wo N-Male von Überläufen des ONU MPCP-Zählers zwischen der gesagten $t_n$ und der gesagten $t'_n$ erfolgen, der genannte Schritt des Berechnens eines entsprechenden ONU MPCP-Zählerwerts $s'_n$ durch eine bestimmte zweite Zeit $t'_n$ insbesondere Folgendes ist:

$$s'_n = (s_n + INT((t'_n - t_n)/\tilde{T}_n) - RTT_{ds}) \bmod 2^m$$

   wo "INT"-Operation eine Rundungsoperation ist; "mod"-Operation eine modulare Operation ist; $m$ eine Bit-Breite des MPCP-Zählers ist; $RTT_{ds}$ ein Ergebnis der Abwärtsstrecke-Entfernungsmessung von dem genannten OLT zur genannten ONU ist und ungefähr RTT/2 entspricht; $\tilde{T}_n$ eine Zeit ist, die einem Einheitswert des MPCP-Zählers entspricht; und $N >= 0$.

4. Verfahren nach Anspruch 3, worin die Zahl N der Male der Überläufe des genannten ONU MPCP-Zählers insbesondere Folgendes ist:

$$N = INT((s_n + INT((t'_n - t_n)/\tilde{T}_n) - RTT_{ds})/2^m)$$

   wo "INT"-Operation die Rundungsoperation ist; $m$ die Bit-Breite des MPCP-Zählers ist; $RTT_{ds}$ das Ergebnis der Abwärtsstrecke-Entfernungsmessung von dem genannten OLT zur genannten ONU ist und ungefähr RTT/2 entspricht; $\tilde{T}_n$ die Zeit ist, die dem Einheitswert des MPCP-Zählers entspricht.

5. Verfahren nach Anspruch 1, worin, in einer Situation, wo 1 oder 0 Überlauf des ONU MPCP-Zählers zwischen dem gesagten $s'_n$ und dem gesagten $s_n$ erfolgt, der genannte Schritt des Berechnens der entsprechenden zweiten Zeit $t'_n$ durch einen bestimmten ONU MPCP-Zählerwert $s'_n$ insbesondere Folgendes ist:

$$t'_n = t_n + SMOD_m(s'_n - s_n) \times \tilde{T}_n + (RTT/2 + \Delta) \times \tilde{T}_n$$

wo m eine Bit-Breite des MPCP-Zählers ist; $SMOD_m(x) = (x + 2^m) \bmod 2^m$; mod"-Operation eine modulare Operation ist; $\Delta$ eine Zeitdifferenz ist, die durch Aufwärtsstrecken- und Abwärtsstrecken-Asymmetrie während einer ganzen Rückkehr-Verarbeitung verursacht wird; $\tilde{T}_n$ eine Zeit ist, die einem Einheitswert des MPCP-Zählers entspricht; und RTT eine Schleifenverzögerung ist.

6. Verfahren nach Anspruch 1, worin, in einer Situation, wo 1 oder 0 Überlauf des ONU MPCP-Zählers zwischen der gesagten ersten Zeit $t_n$ und der gesagten zweiten Zeit $t'_n$ erfolgt, der genannte Schritt des Berechnens des entsprechenden ONU MPCP-Zählerwerts $s'_n$ durch eine bestimmte zweite Zeit $t'_n$ insbesondere Folgendes ist:

$$s'_n = SMOD_m(s_n + INT((t'_n - t_n)/\tilde{T}_n) - (RTT/2 + \Delta))$$

wo m eine Bit-Breite des MPCP-Zählers ist; $SMOD_m(x) = (x + 2^m) \bmod 2^m$; "mod"-Operation eine modulare Operation ist; $\Delta$ eine Zeitdifferenz ist, die durch Aufwärtsstrecken- und Abwärtsstrecken-Asymmetrie während einer ganzen Rückkehr-Verarbeitung verursacht wird; $\tilde{T}_n$ eine Zeit ist, die einem Einheitswert des MPCP-Zählers entspricht; und RTT eine Schleifenverzögerung ist.

7. Verfahren nach einem der Ansprüche 2 bis 6, worin die genannte $\tilde{T}_n$ von der ONU erhalten wird, und zwar durch Division eines Zeitintervalls zwischen der genannten ersten Zeit $t_n$ und der genannten zweiten Zeit $t'_n$ durch eine Differenz zwischen dem ONU MPCP-Zählerwert $s_n$ und dem ONU MPCP-Zählerwert $s'_n$ in diesem Zeitabschnitt.

8. Verfahren nach Anspruch 7, worin, wenn Bezugstaktgeber des genannten OLT MPCP-Zählers und des ONU MPCP-Zählers mit der genannten gesendeten ersten Zeit synchronisiert sind, die genannte $\tilde{T}_n$ eine Konstante ist.

9. Verfahren nach einem der Ansprüche 1 bis 6, worin, vor dem genannten ersten Schritt des Sendens der ersten Zeit $t_n$ und des OLT MPCP-Zählerwerts $s_n$, der der ersten Zeit $t_n$ entspricht, an eine ONU, das Verfahren ferner Folgendes umfasst: das OLT misst periodisch die Entfernung von ONU-Einheiten, und, nachdem es eine neue ONU oder eine Änderung der Entfernungsmessungsinformationen einer ONU gefunden hat, sendet neue Entfernungsmessungsinformationen an die ONU.

10. Verfahren nach einem der Ansprüche 1 bis 6, worin die genannte erste Zeit $t_n$ und der OLT MPCP-Zählerwert $s_n$ an die ONU als Zeitreferenz in einem festen oder nicht-festen Zeitabschnitt von dem OLT gesendet werden.

11. Verfahren nach Anspruch 9, worin, die genannten Entfernungsmessungsinformationen an die ONU von einer Verwaltungsebene oder einer Dienstebene in einem Unicast-Modus gesendet werden; und/oder die genannte erste Zeit $t_n$ und der OLT MPCP-Zählerwert $s_n$ von einer Verwaltungsebene oder einer Dienstebene in einem Broadcast-Modus an die ONU gesendet werden.

12. System zur Zeitsynchronisation in einem passiven optischen Netzwerk, umfassend ein optisches Leitungsendgerät, OLT, und eine optische Netzeinheit, ONU, worin das genannte OLT verwendet wird, um, zu einer ersten Zeit $t_n$, einen OLT-Mehrpunkt-Steuerungsprotokoll, MPCP, -Zählerwert $s_n$ zu lesen und die erste Zeit $t_n$ und den OLT MPCP-Zählerwert $s_n$, der der ersten Zeit $t_n$ entspricht, an die ONU zu senden; die genannte ONU verwendet wird, um, nach Erhaltung der genannten ersten Zeit $t_n$ und des genannten OLT MPCP-Zählerwerts $s_n$, in Verbindung mit Entfernungsmessungsinformationen, eine entsprechende zweite Zeit $t'_n$ durch einen bestimmten ONU MPCP-Zählerwert $s'_n$ zu berechnen oder einen entsprechenden ONU MPCP-Zählerwert $s'_n$ durch eine bestimmte zweite Zeit $t'_n$ zu berechnen und eine Ortszeit durch Verwendung der berechneten $t'_n$ oder $s'_n$ zu aktualisieren.

13. System nach Anspruch 12, worin das OLT ferner verwendet wird, um periodisch die Entfernung von ONU-Einheiten zu messen, und, nachdem es eine neue ONU oder eine Änderung der Entfernungsmessungsinformationen einer ONU gefunden hat, neue Entfernungsmessungsinformationen an die ONU zu senden.

14. System nach Anspruch 13, worin

die genannten Entfernungsmessungsinformationen an die genannte ONU von einer Verwaltungsebene oder einer Dienstebene in einem Unicast-Modus gesendet werden; und/oder

die genannte erste Zeit $t_n$ und der genannte OLT MPCP-Zählerwert $s_n$ von einer Verwaltungsebene oder einer Dienstebene in einem Broadcast-Modus an die genannte ONU gesendet werden.

**Revendications**

1. Procédé de synchronisation temporelle appliqué dans un réseau optique passif, PON, comprenant les étapes suivantes :

   un terminal de ligne optique, OLT (Optical Line Terminal) lit, à un premier instant $t_n$, une valeur de compteur $s_n$ de protocole de commande multipoint, MPCP, (Multi-Point Control Protocol), et transmet le premier instant $t_n$ et la valeur de compteur $s_n$ de MPCP OLT correspondant au premier instant $t_n$ à une unité de réseau optique, ONU (Optical Network Unit) ;
   après la réception desdits $t_n$ et $s_n$, conjointement avec des informations de portée, l'ONU calcule un second instant correspondant $t'_n$ au moyen d'une valeur de compteur $s'_n$ de MPCP ONU déterminée, ou bien il calcule une valeur de compteur $s'_n$ de MPCP ONU correspondante au moyen d'un second instant $t'_n$ déterminé, et actualise un instant local en employant le $t'_n$ ou le $s'_n$ calculé.

2. Procédé selon la revendication 1, dans lequel, dans une situation où se produisent N dépassements d'un compteur de MPCP ONU entre ladite $s'_n$ et ladite $s_n$,
   ladite étape de calcul du second instant correspondant $t'_n$ au moyen d'une valeur de compteur $s'_n$ de MPCP ONU déterminée est notamment :

$$t'_n = t_n + (s'_n + N \times 2^m - s_n + RTT_{ds}) \times \tilde{T}_n$$

   dans lequel m est une largeur de bit du compteur de MPCP ; $RTT_{ds}$ est un résultat de mesure de portée sur la voie descendante dudit OLT à ladite ONU, et est égal à environ RTT/2 ; $\tilde{T}_n$ est un temps correspondant à une valeur unitaire du compteur de MPCP ; et N >= 0.

3. Procédé selon la revendication 1, dans lequel, dans une situation où se produisent N dépassements d'un compteur de MPCP ONU entre ledit $t_n$ et ledit $t'_n$,
   ladite étape de calcul d'une valeur de compteur $s'_n$ de MPCP ONU correspondante au moyen d'un second instant correspondant $t'_n$ est notamment

$$s'_n = (s_n + INT((t'_n - t_n)/\tilde{T}_n) - RTT_{ds}) \bmod 2^m$$

   dans lequel l'opération "INT" est une opération d'arrondissement ; l'opération "mod" est une opération modulaire ; m est une largeur de bit du compteur de MPCP ; $RTT_{ds}$ est un résultat de mesure de portée sur la voie montante dudit OLT à ladite ONU, et est égal à environ RTT/2 ; $\tilde{T}_n$ est un temps correspondant à une valeur unitaire du compteur de MPCP ; et N >= 0.

4. Procédé selon la revendication 3, dans lequel, le numéro N des dépassements dudit compteur de MPCP ONU est notamment :

$$N = INT((s_n + INT((t'_n - t_n)/\tilde{T}_n) - RTT_{ds})/2^m)$$

   dans lequel l'opération "INT" est une opération d'arrondissement ; m est la largeur de bit du compteur de MPCP ; $RTT_{ds}$ est le résultat de mesure de portée sur la voie descendante dudit OLT à ladite ONU, et est égal à environ

RTT/2 ; $\tilde{T}_n$ est le temps correspondant à la valeur unitaire du compteur de MPCP.

**5.** Procédé selon la revendication 1, dans lequel, dans une situation où se produisent 1 ou 0 dépassements du compteur de MPCP ONU entre ladite $s'_n$ et ladite $s_n$, ladite étape de calcul du second instant correspondant $t'_n$ au moyen d'une valeur de compteur $s'_n$ de MPCP ONU déterminée est notamment :

$$t'_n = t_n + SMOD_m (s'_n - s_n) \times \tilde{T}_n + (RTT/2 + \Delta) \times \tilde{T}_n$$

dans lequel m est une largeur de bit du compteur de MPCP ; $SMOD_m (x) = (x + 2^m) \mod 2^m$; l'opération "mod" est une opération modulaire ; $\Delta$ est une différence temporelle déterminée par l'asymétrie entre la voie montante et la voie descendante pendant un traitement de retour entier; $\tilde{T}_n$ est un temps correspondant à une valeur unitaire du compteur de MPCP ; et RTT est un retard de boucle.

**6.** Procédé selon la revendication 1, dans lequel, dans une situation où se produisent 1 ou 0 dépassements du compteur de MPCP ONU entre ledit premier instant $t_n$ et ledit second instant $t'_n$, ladite étape de calcul de la valeur de compteur $s'_n$ de MPCP ONU correspondante au moyen d'un second instant correspondant $t'_n$ est notamment

$$s'_n = SMOD_m (s_n + INT((t'_n - t_n) / \tilde{T}_n) - (RTT/2 + \Delta))$$

dans lequel m est une largeur de bit du compteur de MPCP ; $SMOD_m (x) = (x + 2^m) \mod 2^m$; l'opération "mod" est une opération modulaire ; $\Delta$ est une différence temporelle déterminée par l'asymétrie entre la voie montante et la voie descendante pendant un traitement de retour entier; $\tilde{T}_n$ est un temps correspondant à une valeur unitaire du compteur de MPCP ; et RTT est un retard de boucle.

**7.** Procédé selon n'importe laquelle des revendications 2 à 6, dans lequel ledit $\tilde{T}_n$ est obtenu par l'ONU en divisant un intervalle de temps entre ledit premier instant $t_n$ et ledit second instant $t'_n$ par une différence entre la valeur de compteur $s_n$ de MPCP ONU et la valeur de compteur $s'_n$ de MPCP ONU dans cet intervalle de temps.

**8.** Procédé selon la revendication 7 dans lequel, quand les horloges de référence desdits compteur de MPCP OLT et compteur de MPCP ONU sont synchronisées avec ledit premier instant transmis, ledit $\tilde{T}_n$ est une constante.

**9.** Procédé selon n'importe laquelle des revendications 1 à 6 dans lequel, avant ladite étape de transmission du premier instant $t_n$ et de la valeur de compteur $s_n$ de MPCP OLT correspondante au premier instant $t_n$ à une ONU, le procédé comprend par ailleurs l'étape suivante : l'OLT mesure périodiquement la portée des ONUs, et dès qu'il trouve une nouvelle ONU ou une variation des informations de portée d'une ONU, il transmet de nouvelles informations de portée à l'ONU.

**10.** Procédé selon n'importe laquelle des revendications 1 à 6, dans lequel ledit premier instant $t_n$ et la valeur de compteur $S_n$ de MPCP OLT sont transmis par l'OLT à l'ONU en forme de référence de temps dans une période fixe ou non fixe.

**11.** Procédé selon la revendication 9, dans lequel lesdites informations de portée sont transmises à l'ONU par un plan de gestion ou un plan de service en mode unicast ; et/ou ledit premier instant $t_n$ et ladite valeur de compteur $s_n$ de MPCP OLT sont transmis à l'ONU par un plan de gestion ou un plan de service en mode broadcast.

**12.** Système de synchronisation temporelle dans un réseau optique passif, comprenant un terminal de ligne optique, OLT (Optical Line Terminal) lit, et une unité de réseau optique, ONU (Optical Network Unit), dans lequel

ledit OLT est employé pour lire, à un premier instant $t_n$, une valeur de compteur $s_n$ de protocole de commande multipoint, MPCP, (Multi-Point Control Protocol), et pour transmettre le premier instant $t_n$ et la valeur de compteur $s_n$ de MPCP OLT correspondant au premier instant $t_n$ à l'ONU ;

ladite ONU est employé pour calculer, après la réception dudit premier instant $t_n$ et de ladite valeur de compteur $s_n$ de MPCP OLT, conjointement avec des informations de portée, un second instant correspondant $t'_n$ au moyen d'une valeur de compteur $s'_n$ de MPCP ONU déterminée, ou bien pour calculer une valeur de compteur $s'_n$ de MPCP ONU correspondante au moyen d'un second instant $t'_n$ déterminé, et pour actualiser un instant local en employant le $t'_n$ ou le $s'_n$.

**13.** Système selon la revendication 12, dans lequel
ledit OLT est par ailleurs employé pour mesurer périodiquement la portée des ONUs, et une fois qu'il trouve une nouvelle ONU ou une variation des informations de portée d'une ONU, pour transmettre de nouvelles informations de portée à l'ONU.

**14.** Système selon la revendication 13, dans lequel
lesdites informations de portée sont transmises à ladite ONU par un plan de gestion ou un plan de service en mode unicast ; et/ou ledit premier instant $t_n$ et ladite valeur de compteur $s_n$ de MPCP OLT sont transmis à l'ONU par un plan de gestion ou un plan de service en mode broadcast.

FIG. 1

201 The OLT transmits the ranging information to the ONU

202 The OLT reads the OLT MPCP counter value $s_n$ at a certain time of $t_n$

203 The OLT transmits $t_n$ and $s_n$ to the ONU

204 After receiving the above ($t_n$, $s_n$) data frame, the ONU calculates a corresponding time $t'_n$ through a determined ONU MPCP counter value $s'_n$, or calculates a corresponding ONU MPCP counter value $s'_n$ through a determined time $t'_n$

FIG. 2

$S_{n-1}$    OLT MPCP counter value= $s_n$    $S_{n+1}$

$t_{n-1}$                     $t_n$          $t_{n+1}$

OLT — Time

ONU — Time

OLT MPCP counter value= $s'_n$

$t'_n$

$t'_{n+1}$

$s'_{n+1}$

$t_{n-1}, s_{n-1}$

$t_n, s_n$

$t_{n+1}, s_{n+1}$

# FIG. 3